# EUROPÄISCHE PATENTSCHRIFT

(11) **EP 2 337 706 B1**
(45) Veröffentlichungstag und Bekanntmachung des Hinweises auf die Patenterteilung: **23.11.2016**
(21) Anmeldenummer: 09756664.0
(22) Anmeldetag: 05.10.2009
(51) Int. Cl.: B60N 2/235

(54) **VERRIEGELUNGSVORRICHTUNG, INSBESONDERE FÜR EINEN VERSTELLBESCHLAG UND INSBESONDERE FÜR EINEN FAHRZEUGSITZ, UND FAHRZEUGSITZ**
LOCKING DEVICE, ESPECIALLY FOR AN ADJUSTMENT FITTING AND ESPECIALLY FOR A VEHICLE SEAT, AND VEHICLE SEAT
DISPOSITIF DE VERROUILLAGE, DESTINÉ EN PARTICULIER À UNE FERRURE DE RÉGLAGE EN PARTICULIER POUR UN SIÈGE DE VÉHICULE, ET SIÈGE DE VÉHICULE

(30) Priorität: 23.10.2008 DE 102008052893
(43) Veröffentlichungstag der Anmeldung: 29.06.2011
(73) Patentinhaber: Johnson Controls GmbH, 51399 Burscheid (DE)
(72) Erfinder: KIENKE, Ingo, 42929 Wermelskirchen (DE)
(74) Vertreter: Schwöbel, Thilo K.
(86) Internationale Anmeldenummer: PCT/EP2009/007103
(87) Internationale Veröffentlichungsnummer: WO 2010/046024

(56) Entgegenhaltungen:
- WO-A2-2006/037470
- WO-A2-2007/000307
- US-A1- 2002 171 279

## Beschreibung

Die vorliegende Erfindung betrifft eine Verriegelungsvorrichtung, insbesondere für einen Verstellbeschlag und insbesondere für einen Fahrzeugsitz. Mittels der Verriegelungsvorrichtung ist es möglich, einen Verstellbeschlag zu verriegeln bzw. zu entriegeln, d.h. insbesondere die Verstellung eines ersten Beschlagteils des Verstellbeschlags und eines zweiten Beschlagteils des Verstellbeschlags relativ zueinander zu verriegeln und zu entriegeln.

Verriegelungsvorrichtungen für Fahrzeuge, insbesondere für Fahrzeugsitze, müssen großen Belastungen standhalten, um sich insbesondere in einer Unfallsituation nicht ungewollt zu öffnen (bzw. zu entriegeln) und dadurch eine Gefahr für Fahrzeuginsassen darzustellen. Auf der anderen Seite sollen Verriegelungsvorrichtungen für Fahrzeuge jedoch auch in normalen Benutzungssituationen, d.h. solchen Situationen, in denen keine erhöhten Beschleunigungskräfte auf das Fahrzeug wirken, leicht zu bedienen sein, d.h. insbesondere in einer für einen Benutzer angenehmen Weise beispielsweise zu entriegeln sein. Hierzu wird in der Druckschrift WO 2007/000307 A2 oder im Dokument WO2006/037470 vorgeschlagen, dass ein Betätigungselement zur Entriegelung der Verriegelungsvorrichtung zweiteilig vorgesehen ist.

Der Erfindung liegt die Aufgabe zugrunde, eine Verriegelungsvorrichtung zur Verriegelung bzw. Entriegelung eines Verstellbeschlags bereitzustellen, die auf kostengünstige Weise leicht entriegelbar ist und schnell und einfach montiert werden kann und die dennoch eine sehr gute Sicherung gegen ungewollte bzw. ungesicherte Öffnungsbewegungen bereitstellt.

Diese Aufgabe wird gelöst durch eine Verriegelungsvorrichtung mit den Merkmalen des Anspruchs 1 versehen, insbesondere für einen Verstellbeschlag und insbesondere für einen Fahrzeugsitz, wobei die Verriegelungsvorrichtung eine um eine erste Drehachse drehbare Verriegelungsnocke und ein um eine weitere Drehachse drehbares Betätigungselement aufweist, wobei die Verriegelungsvorrichtung in eine Verriegelungsstellung und in eine Freigabestellung einstellbar ist, wobei das Betätigungselement eine Verzahnung aufweist, wobei die Verriegelungsnocke eine Gegenverzahnung aufweist, wobei die Gegenverzahnung mit der Verzahnung kämmt, wobei die Gegenverzahnung eine erste Öffnungsflanke aufweist, wobei die Verzahnung eine zweite Öffnungsflanke aufweist und wobei zumindest eine der Öffnungsflanken zur Bewirkung einer vergrößerten Öffnungsübersetzung im Vergleich zum weiteren Verlauf der Verzahnungen abgeflacht vorgesehen ist. Hierdurch ist es erfindungsgemäß mit einfachen Mitteln möglich, eine leichte Entriegelbarkeit mit einem vergleichsweise einfachen Aufbau und einem vergleichsweise geringen Montageaufwand zu verbinden sowie trotzdem eine gute und sichere Verriegelung der Verriegelungsvorrichtung zu gewährleisten. Weiterhin ist es erfindungsgemäß möglich, mittels eines Teilungsfehlers auch eine Blockierverriegelung gegen selbsttätiges Öffnen der Verriegelungsvorrichtung, insbesondere unter Last, beipielsweise im Falle eines ECE R17 Tests (nicht besetzter Fahrzeugsitz mit Ladungsblöcken hinter dem Sitz), zu erzielen.

Weitere bevorzugte Ausgestaltungen der Erfindung sind in den Unteransprüchen aufgeführt.

Erfindungsgemäß ist sowohl die erste als auch die zweite Öffnungsflanke zur Bewirkung einer anfänglich vergrößerten Öffnungsübersetzung im Vergleich zum weiteren Verlauf der Verzahnungen abgeflacht vorgesehen. Weiterhin ist erfindungsgemäß bevorzugt, dass eine anfängliche Vergrößerung der Öffnungsübersetzung zwischen den Öffnungsflanken mit zunehmender Öffnungsbewegung vorgesehen ist. Hierdurch ist ein besonders sicherer und zugleich leicht bedienbarer Betrieb der Verriegelungsvorrichtung möglich.

Weiterhin ist erfindungsgemäß bevorzugt, dass zwischen der ersten Öffnungsflanke und der zweiten Öffnungsflanke ein Spalt vorgesehen ist. Hierdurch kann erfindungsgemäß verschiedenen Toleranzsituationen Rechnung getragen werden. Der Entriegelungsweg der Verriegelungsvorrichtung kann damit trotz eines Teilungsfehlers zwischen der Verzahnung und der Gegenverzahnung erfindungsgemäß besonders klein sein.

Erfindungsgemäß weist die Gegenverzahnung eine erste Schließflanke auf, und die Verzahnung aufweist eine zweite Schließflanke und an die zweite Schließflanke angrenzende Zahnlücke ist der Verzahnung im Vergleich zu dem im Bereich der ersten Schließflanke angeordneten und mit ihr kämmenden Zahn ist der Gegenverzahnung zur Herbeiführung einer Blockierfunktion vergrößert vorgesehen.

Hierdurch wird ein Teilungsfehler realisiert, der erfindungsgemäß insbesondere von 3° bis 7° liegt, bevorzugt im Bereich 4° bis 6°, ganz besonders bevorzugt bei 5,5° liegt. Hierbei kann eine Blockierverriegelung gegen selbsttätiges Öffnen der Verriegelungsvorrichtung erreicht werden. Der Teilungsfehler kann ohne Blockierverriegelung auch kleiner ausgeführt werden.

Weiterhin ist erfindungsgemäß bevorzugt, dass die Verriegelungsnocke federvorbelastet in die Verriegelungsstellung hin vorgespannt vorgesehen ist.

Ein weiterer Gegenstand der vorliegenden Erfindung betrifft einen Fahrzeugsitz mit einem Sitzteil, mit einem Lehnenteil und mit einem Verstellbeschlag, wobei eine erfindungsgemäße Verriegelungsvorrichtung als Teil des Verstellbeschlags vorgesehen ist.

Ausführungsbeispiele der Erfindung sind in der Zeichnung dargestellt und in der nachfolgenden Beschreibung näher erläutert. Die Figuren schränken den allgemeinen Erfindungsgedanken nicht ein.
Figur 1 zeigt eine erfindungsgemäße Verriegelungsvorrichtung in ihrer Verriegelungsstellung in Seitenansicht.
Figur 2 zeigt die erfindungsgemäße Verriegelungsvorrichtung in ihrer Freigabestellung in Seitenansicht.
Figur 3 zeigt die erfindungsgemäße Verriegelungsvorrichtung in ihrer Verriegelungsstellung in Seitenansicht, wobei geringfügig andere Abmessungen von Verriegelungsnocke relativ zu Verriegelungsklinke gegenüber der Darstellung gemäß Figur 1 vorliegen.
Figur 4 zeigt die erfindungsgemäße Verriegelungsvorrichtung im Zustand der Realisierung einer Blockierfunktion.
Figur 5 zeigt eine Detaildarstellung der erfindungsgemäßen Verriegelungsvorrichtung.

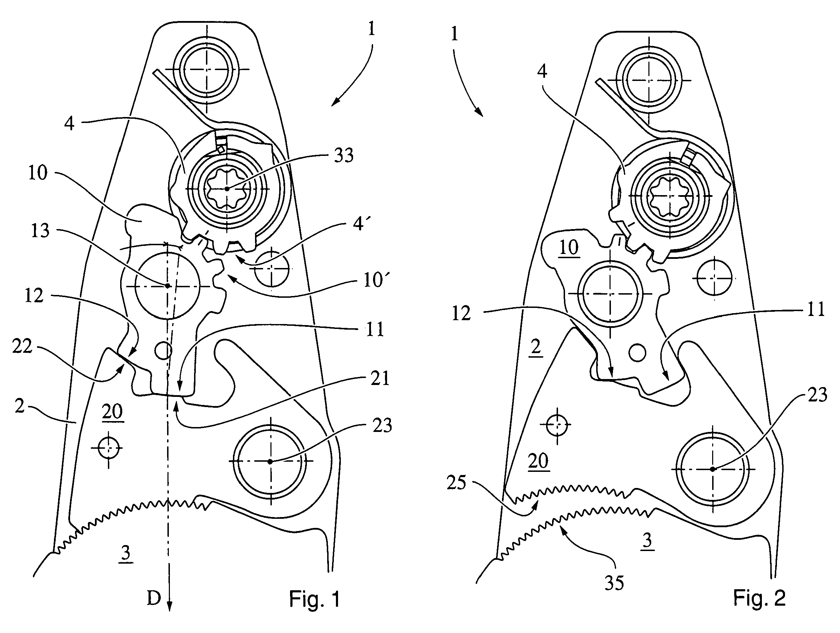

In den Figuren 1 bis 3 ist eine erfindungsgemäße Verriegelungsvorrichtung 1 in Seitenansicht dargestellt. Die Verriegelungsvorrichtung 1 weist eine Verriegelungsnocke 10 auf, die um eine erste Drehachse 13 drehbar bzw. schwenkbar vorgesehen ist. Die Verriegelungsvorrichtung 1 weist ferner eine Verriegelungsklinke 20 auf, die um eine zweite Drehachse 23 drehbar bzw. schwenkbar vorgesehen ist. Die Verriegelungsvorrichtung 1 ist insbesondere Teil eines Verstellbeschlags (nicht eigens mittels eines Bezugszeichens in den Figuren dargestellt), wobei der Verstellbeschlag insbesondere ein erstes Beschlagteil 2 und ein zweites Beschlagteil 3 umfasst und beispielsweise als Lehnenverstellbeschlag eines Fahrzeugsitzes (nicht dargestellt) vorgesehen ist, wobei ein solcher Fahrzeugsitz relativ zueinander bewegliche Teile aufweist, beispielsweise ein Sitzteil und ein Lehnenteil, und wobei jeweils eines der Beschlagteile 2, 3 an den relativ zueinander beweglichen Teilen des Fahrzeugsitzes angebracht sind. Am ersten Beschlagteil 2 sind dann sowohl die Verriegelungsnocke 10 als auch die Verriegelungsklinke 20 sowie die erste und zweite Drehachse 13, 23 vorgesehen. Erfindungsgemäß ist es insbesondere vorgesehen, dass das erste Beschlagteil 2 an einer Rückenlehne (nicht dargestellt) und das zweite Beschlagteil 3 an einem Sitzteil (nicht dargestellt) oder umgekehrt angebracht ist. Hierbei kann es sich bei dem zweiten Beschlagteil 3 insbesondere um ein lehnenteilseitiges Beschlagelement eines Rückenlehnenverstellbeschlags (sogenannter Recliner) handeln, d.h. das zweite Beschlagteil 3 muss nicht zwingend sitzteilfest (bzw. sitzteildrehfest) vorgesehen sein. Die Verriegelungsvorrichtung 1 sichert beispielsweise einen Rastbeschlag zur Sitzlehnenverstellung. Hierzu ist beispielsweise die Verriegelungsklinke 20 mit einer ersten Rastverzahnung 25 ausgebildet und es ist das zweite Beschlagteil 3 mit einer zweiten Rastverzahnung 35 ausgebildet.

Die Verriegelungsvorrichtung 1 ist in eine in Figur 1 dargestellte Verriegelungsstellung und in eine in Figur 2 dargestellte Freigabestellung bzw. Entriegelungsstellung einstellbar. Zwischen der Verriegelungsstellung und der Freigabestellung werden die Verriegelungsnocke 10 um die erste Drehachse 13 und die Verriegelungsklinke 20 um die zweite Drehachse 23 in jeweils gegensinniger Drehrichtung verschwenkt. In der in den Figuren 1 bis 5 gewählten Darstellung wird jeweils die Verriegelungsklinke 20 für die Richtung von der Verriegelungsstellung zur Entriegelungsstellung im Uhrzeigersinn gedreht (und umgekehrt) und es wird die Verriegelungsnocke 10 für die Richtung von der Verriegelungsstellung zur Entriegelungsstellung im Gegenuhrzeigersinn gedreht (und umgekehrt).

Die Verriegelungsnocke 10 weist einen ersten Verriegelungsbereich 11 und einen ersten Sicherheitsbereich 12 auf. Der erste Verriegelungsbereich 11 und der erste Sicherheitsbereich 12 ist in Umfangsrichtung um die erste Drehachse 13 im wesentlichen hintereinander angeordnet. Die Verriegelungsklinke 20 weist einen zweiten Verriegelungsbereich 21 und einen zweiten Sicherheitsbereich 22 auf. Der zweite Verriegelungsbereich 21 und der zweite Sicherheitsbereich 22 ist in der Verriegelungsstellung der Verriegelungsklinke 20 in Umfangsrichtung um die erste Drehachse 13 ebenfalls im wesentlichen hintereinander angeordnet. Hierdurch überdecken sich in der Verriegelungsstellung der erste Verriegelungsbereich 11 mit dem zweiten Verriegelungsbereich 21 und der erste Sicherheitsbereich 12 mit dem zweiten Sicherheitsbereich 22. Mit anderen Worten bilden sowohl der erste und zweite Verriegelungsbereich 11, 21 als auch der erste und zweite Sicherheitsbereich 12, 22 jeweils Oberflächen mit Schließkurven. Hierbei ist es erfindungsgemäß vorgesehen, dass sich die Oberflächen des ersten und zweiten Verriegelungsbereichs 11, 21 in der Verriegelungsstellung berühren, d.h. in Kontakt miteinander befindlich sind, und dass sich die Oberflächen des ersten und zweiten Sicherheitsbereichs 12, 22 in der Verriegelungsstellung und in einer normalen Benutzungssituation der Verriegelungsvorrichtung 1 (d.h. ohne dass (beispielsweise unfallbedingte) erhöhte Beschleunigungskräfte zu einer Belastung der Verriegelungsvorrichtung 1 führen) nicht berühren, sondern lediglich in einem bestimmten (vergleichsweise geringen) Abstand gegenüberliegen. Dieser Abstand beträgt erfindungsgemäß beispielsweise etwa 0,1 Millimeter bis etwa 1,0 Millimeter, bevorzugt etwa 0,15 Millimeter bis etwa 0,5 Millimeter, besonders bevorzugt etwa 0,2 Millimeter bis etwa 0,4 Millimeter, ganz besonders bevorzugt etwa 0,24 Millimeter. Der in der Normalsituation vorgesehene Abstand zwischen den gegenüberliegenden Oberflächen der Sicherheitsbereiche 12, 22 hat den Vorteil, dass zwischen den Sicherheitsbereichen 12, 22 (in einer normalen Benutzungssituation) keinerlei Losbrechkräfte aufzubringen sind, um die Verriegelungsvorrichtung 1 in ihre Freigabestellung bzw. Entriegelungsstellung einzustellen. Lediglich im Fall von höheren Belastungen der Verriegelungsvorrichtung 1 kommt es (insbesondere durch Verformung entsprechender belasteter Komponenten bzw. Teile) zu einem Kontakt der Sicherheitsbereiche 12, 22, so dass diese in solchen Situationen zu einer erhöhten Stabilität der Verriegelungsvorrichtung 1 beitragen. Aufgrund der Anordnung der zweiten Drehachse 23 auf einer Seite der angedeuteten Verbindungslinie zwischen der ersten Drehachse 13 und der mit dem Bezugszeichen D bezeichneten Drehachse des ersten Beschlagteils 2 um das zweite Beschlagteil 3 ist erfindungsgemäß die Haltekraft der Verriegelungsvorrichtung in einer Kraftrichtung größer als in die andere Kraftrichtung. In den Figuren entspricht beispielsweise eine Drehung des ersten Beschlagteils 2 nach links einer Drehung der Rückenlehne nach vorne; die Festigkeit in dieser Drehrichtung wird auch Vorwärtsfestigkeit genannt. Entsprechend wird die Festigkeit in der entgegengesetzten Drehrichtung Rückwärtsfestigkeit genannt. Erfindungsgemäß wird die Rückwärtsfestigkeit insbesondere durch das Vorsehen der Sicherheitsbereiche gestärkt. In den Figuren ist jeweils der Fall dargestellt, dass der erste und zweite Verriegelungsbereich 11, 21 näher an der Verbindungslinie vorgesehen ist als der Sicherheitsbereich 12, 22. Erfindungsgemäß kann es jedoch auch umgekehrt vorgesehen sein (nicht dargestellt). Insbesondere ist der erste und der zweite Verriegelungsbereich 11, 21 auf der Verbindungslinie zwischen der ersten Drehachse 13 und der Drehachse D des ersten Beschlagteils 2 um das zweite Beschlagteil 3 vorgesehen bzw. die Verbindungslinie schneidet diese Bereiche.

Zur Einstellung der Freigabestellung ausgehend von der Verriegelungsstellung ist erfindungsgemäß insbesondere ein Stellelement 4 vorgesehen, welches durch eine Feder 5 in eine der Verriegelungsstellung der Verriegelungsnocke 10 entsprechende Position vorgespannt wird. (Diese Richtung, in die das Stellelement 4 durch die Feder 5 vorgespannt ist, entspricht gemäß der Darstellung in den Zeichnungen einer Richtung entgegen des Uhrzeigersinns.) Hierzu weist das Stellelement 4 eine Verzahnung 4' auf, die mit einer Gegenverzahnung 10' der Verriegelungsnocke 10 kämmt.

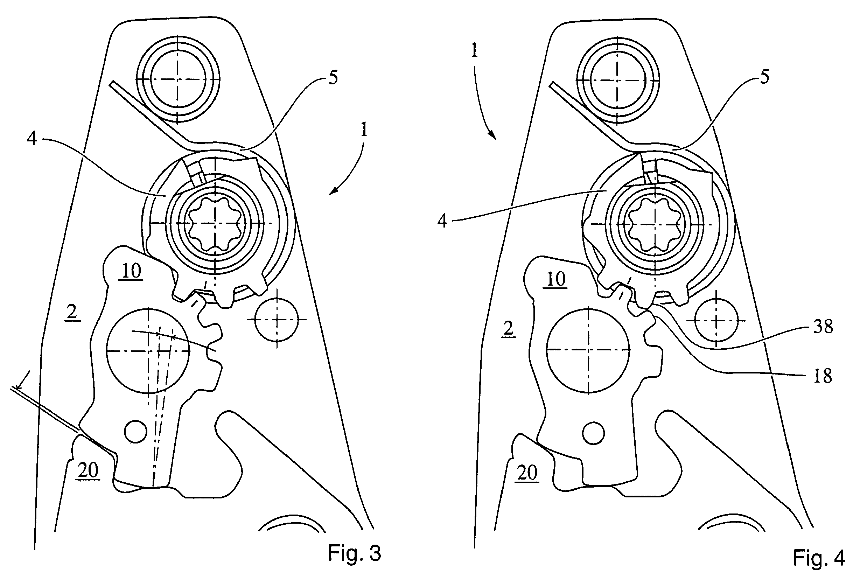

In Figur 3 ist eine erfindungsgemäße Verriegelungsvorrichtung 1 in Seitenansicht dargestellt, wobei aufgrund der Gesamttoleranzsituation geringfügig andere Abmessungen von Verriegelungsnocke 10 relativ zu Verriegelungsklinke 20 gegenüber der Darstellung gemäß Figur 1 vorliegen. Solche Änderungen der Abmessung ist den herstellungsbedingten Toleranzen zuzuschreiben. Trotz dieser Toleranzen kann erfindungsgemäß sowohl eine sichere Verriegelung der Verriegelungsvorrichtung als auch eine gute Entriegelbarkeit (insbesondere mit geringen Losbrech-Kräften) gewährleistet werden.

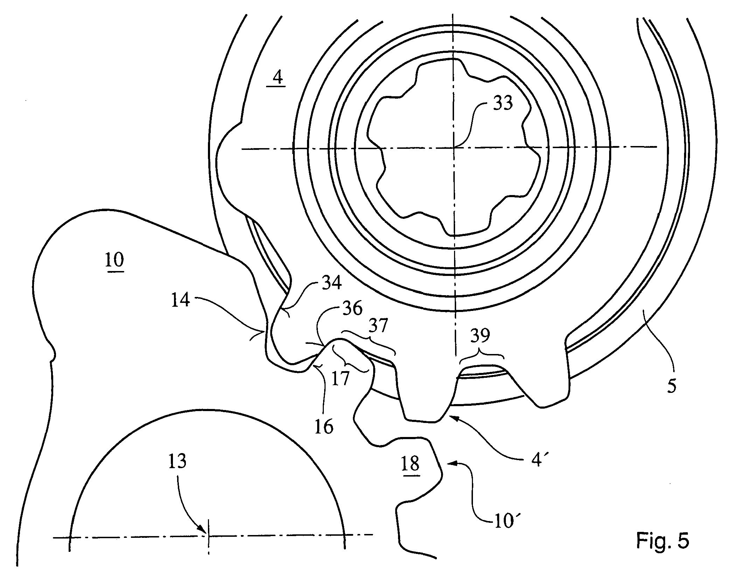

In Figur 5 ist eine vergrößerte Detaildarstellung der erfindungsgemäßen Verriegelungsvorrichtung 1 als Ausschnitt aus Figur 1 dargestellt. Die Verriegelungsvorrichtung 1 weist das Stellelement 4 auf, das im Folgenden auch als Betätigungselement 4 bezeichnet wird und welches zur Betätigung der Entriegelung der Verriegelungsvorrichtung 1 vorgesehen ist. Die Verzahnung 4' (welche im Folgenden auch als zweite Verzahnung bezeichnet wird) kämmt mit der Gegenverzahnung 10' (welche im Folgenden auch als erste Verzahnung bezeichnet wird). Das Betätigungselement 4 wird (beispielsweise herbeigeführt durch eine Handbetätigung eines Benutzers) im Uhrzeigersinn zur Herbeiführung einer Öffnungsbewegung der Verriegelungsvorrichtung 1 gedreht, was zu einer Öffnungsbewegung der Verriegelungsnocke 10 entgegen dem Uhrzeigersinn und (anschließend) einer Öffnungsbewegung der Verriegelungsklinke 20 im Uhrzeigersinn führt. Bei dieser Öffnungsbewegung stößt eine zweite Öffnungsflanke 34 (der Verzahnung 4') des Betätigungselements 4 an eine erste Öffnungsflanke 14 (der Gegenverzahnung 10') der Verriegelungsnocke 10. Erfindungsgemäß sind die Öffnungsflanken 14, 34 derart vorgesehen, dass eine vergrößerte Öffnungsübersetzung im Vergleich zum weiteren Verlauf der Verzahnungen 4', 10' vorgesehen ist. Hierdurch kann die anfängliche Bewegung der Verriegelungsnocke 10 ausgehend von ihrer in Figur 1 und Figur 5 dargestellten Verriegelungsposition besonders hoch übersetzt bewirkt werden. Dies wiederum hat die vorteilhafte Wirkung, dass die maximale zur Öffnung der Verriegelungsvorrichtung am Betätigungselement 4 angreifende Kraft (bzw. das maximale Öffnungsmoment) geringer ist, was seitens eines Benutzers als höherer Komfort wahrgenommen wird. Die Öffnungsflanken 14, 34 sind derart aufeinander abgestimmt, dass eine solche anfänglich vergrößerte Übersetzung realisiert ist. Insbesondere ist hierzu eine Abflachung der ersten Öffnungsflanke 14 und/oder der zweiten Öffnungsflanke 34 vorgesehen.

Wenn die für die Verzahnung 4' und die Gegenverzahnung 10' maßgeblichen Radien der Verriegelungsnocke 10 bzw. des Betätigungselements 4 beispielsweise gleich groß vorgesehen wären, wäre bei einer Evolventenverzahnung mit einer normalen Übersetzung von 1:1 auch für die anfängliche Bewegung der Verriegelungsnocke 10 ausgehend von ihrer Verriegelungsposition zu rechnen. Dies würde ein vergleichsweise hohes sogenanntes Losbrechmoment bewirken, d.h. ein Kraftaufwand zu Lösung der Verriegelungsposition der Verriegelungsnocke 20 (gegenüber der Verriegelungsklinke 20). Durch die erfindungsgemäßen Maßnahmen wird diese Übersetzung zumindest anfänglich vergrößert, beispielsweise auf 2:1 (während beispielsweise der ersten 3° oder 5° der Entriegelungsbewegung), was zu einer Erleichterung der Öffnungsbewegung führt (sanftes Einlaufen in das normale Übersetzungsverhältnis).

Die Feder 5 hat die Wirkung, das Betätigungselement 4 in Gegenuhrzeigerrichtung zu Drehen. Aufgrund der miteinander kämmenden Verzahnung 4' und Gegenverzahnung 10' führt dies (ohne weitere Betätigungskräfte) zur Einstellung der Verriegelungsposition der Verriegelungsvorrichtung 1. Hierbei drückt eine zweite Schließflanke 36 (der Verzahnung 4') des Betätigungselements 4 auf eine erste Schließflanke 16 (der Gegenverzahnung 10') der Verriegelungsnocke 10. Für den Fall, dass eine nicht von einer Bewegung des Betätigungselements 4 ausgehende (sondern von einer Bewegung der Verriegelungsnocke 10 ausgehende) Öffnungsbewegung stattfindet, drückt weiterhin die Feder 5 die Schließflanken 16, 36 gegeneinander, so dass sich an der relativen Einstellung der Verzahnung 4' und der Gegenverzahnung 10' gegenüber der Darstellung in Figur 5 nichts ändert, sondern nur die Verriegelungsnocke 10 in Gegenuhrzeigerrichtung sowie das Betätigungselement 4 in Uhrzeigerrichtung weitergedreht wird. In diesem Falle erfolgt bei einer weiteren Drehung (der Verriegelungsnocke 10 in Gegenuhrzeigerrichtung und des Betätigungselements 4 in Uhrzeigerrichtung) eine Blockierung, weil ein erster Blockierzahn 18 der Gegenverzahnung 10' auf einen zweiten Blockierzahn 38 der Verzahnung 4' trifft. Ein weiteres (selbsttätiges und damit unerwünschtes) Öffnen der Verriegelungsvorrichtung 1 aufgrund einer (aus welchem Grund auch immer auftretenden) Öffnungsbewegung der Verriegelungsnocke 10 wird damit wirksam verhindert und damit das Sicherheitsniveau der Verriegelungsvorrichtung 1 erhöht. Die Blockierung der Blockierzähne 38, 18 ist in Figur 4 beispielhaft dargestellt. Erkennbar ist, dass trotz der teilweisen Bewegung der Verriegelungsnocke 10 in Öffnungsrichtung dennoch eine Überdeckung der Verriegelungsbereiche 11, 21 bzw. der Sicherheitsbereiche 12, 22 vorliegt, so dass die Verriegelungsvorrichtung 1 auch in der in Figur 4 dargestellten Blockiersituation verriegelt ist.

Die Realisierung sowohl der erwähnten Blockierfunktion als auch der Erleichterung der Öffnungsbewegung durch eine Erhöhung der Übersetzung zwischen der Bewegung des Betätigungselements 4 und der Verriegelungsnocke 10 wird erfindungsgemäß unterstützt durch das Vorsehen einer relativ (zur Größe eines Zahns 17 der Verriegelungsnocke 10 bzw. einer normalen Zahnlücke 39) vergrößerten Zahnlücke 37 (im Bereich der Verzahnung 4' bzw. des Betätigungselements 4). Hierdurch ergibt sich bei einer vom Betätigungselement 4 ausgehenden Bewegung in Öffnungsrichtung die Möglichkeit, durch Anpassung der Öffnungsflanken 14, 34 die anfängliche Übersetzung zu erhöhen. Ferner ergibt sich hierdurch bei einer von der Verriegelungsnocke 10 ausgehenden Bewegung in Öffnungsrichtung die Möglichkeit, die Blockierfunktion gemäß Figur 4 vorzusehen, wenn der Teilungsfehler ausreichend groß realisiert ist. Dem Teilungsfehler entspricht das Verhältnis der vergrößerten Zahnlücke 37 zur normalen Zahnlücke 39 in Grad.

Der Fachmann weiß, dass die Verhältnisse zwischen der Verzahnung 4' und der Gegenverzahnung 10' auch umgedreht sein können (in den Figuren nicht dargestellt), d.h. es könnte die zur Herbeiführung der Blockierfunktion vorhandene Zahnlücke 37 auch an der Gegenverzahnung 10' und damit an der Verriegelungsnocke 10 vorgesehen sein und entsprechend der Zahn 17 auch an der Verzahnung 4' des Betätigungselements 4 vorgesehen sein.

### Bezugszeichenliste

- 1: Verriegelungsvorrichtung
- 2: erstes Beschlagteil
- 3: zweites Beschlagteil
- 4: Stellelement / Betätigungselement
- 4': Verzahnung
- 5: Feder
- 10: Verriegelungsnocke
- 10': Gegenverzahnung
- 11: erster Verriegelungsbereich
- 12: erster Sicherheitsbereich
- 13: erste Drehachse
- 13': Zapfen
- 14: erste Öffnungsflanke
- 16: erste Schließflanke
- 17: Zahn
- 18: erster Blockierzahn
- 20: Verriegelungsklinke
- 21: zweiter Verriegelungsbereich
- 22: zweiter Sicherheitsbereich
- 23: zweite Drehachse
- 25: erste Rastverzahnung
- 33: weitere Drehachse
- 34: zweite Öffnungsflanke
- 35: zweite Rastverzahnung
- 36: zweite Schließflanke
- 37: Zahnlücke
- 38: zweiter Blockierzahn
- 39: normale Zahnlücke
- D: Drehachse des ersten Beschlagteils

## Patentansprüche

1. Verriegelungsvorrichtung (1), insbesondere für einen Verstellbeschlag und insbesondere für einen Fahrzeugsitz, wobei die Verriegelungsvorrichtung (1) eine um eine erste Drehachse (13) drehbare Verriegelungsnocke (10) und ein um eine weitere Drehachse (33) drehbares Betätigungselement (4) aufweist, wobei die Verriegelungsvorrichtung (1) in eine Verriegelungsstellung und in eine Freigabestellung einstellbar ist, wobei das Betätigungselement (4) eine Verzahnung (4') aufweist, wobei die Verriegelungsnocke (10) eine Gegenverzahnung (10') aufweist, wobei die Gegenverzahnung (10') mit der Verzahnung (4') kämmt, **dadurch gekennzeichnet, dass** die Gegenverzahnung (10') eine erste Öffnungsflanke (14) aufweist, dass die Verzahnung (4') eine zweite Öffnungsflanke (34) aufweist und dass sowohl die erste als auch die zweite Öffnunasflanke (14, 34) zur Bewirkung einer anfänglich vergrößerten Öffnungsübersetzung im Vergleich zum weiteren Verlauf der Verzahnungen (4', 10') abgeflacht vorgesehen ist, dass die Gegenverzahnung (10') eine erste Schließflanke (16) aufweist, dass die Verzahnung (4') eine zweite Schließflanke (36) aufweist und dass die an die zweite Schließflanke (36) angrenzende Zahnlücke (37) der Verzahnung (4') im Vergleich zu dem im Bereich der ersten Schließflanke (16) angeordneten und mit ihr kämmenden Zahn (17) der Gegenverzahnung (10') zur Herbeiführung einer Blockierfunktion vergrößert vorgesehen ist.

2. Verriegelungsvorrichtung (1) nach Anspruch 1, **dadurch gekennzeichnet, dass** eine anfängliche Vergrößerung der Öffnungsübersetzung zwischen den Öffnungsflanken (14, 34) mit zunehmender Öffnungsbewegung vorgesehen ist.

3. Verriegelungsvorrichtung (1) nach einem der vorhergehenden Ansprüche, **dadurch gekennzeichnet, dass** zwischen der ersten Öffnungsflanke (14) und der zweiten Öffnungsflanke (34) ein Spalt vorgesehen ist.

4. Verriegelungsvorrichtung (1) nach einem der vorhergehenden Ansprüche, **dadurch gekennzeichnet, dass** die Verriegelungsnocke (10) federvorbelastet in die Verriegelungsstellung hin vorgespannt vorgesehen ist.

5. Fahrzeugsitz mit einem Sitzteil, mit einem Lehnenteil und mit einem Verstellbeschlag, wobei eine Verriegelungsvorrichtung (1) gemäß einem der vorhergehenden Ansprüche als Teil des Verstellbeschlags vorgesehen ist.

## Claims

1. Locking device (1), especially for an adjustment fitting and especially for a vehicle seat, the locking device (1) having a locking cam (10) which can be rotated about a first rotational axis (13) and an actuating element (4) which can be rotated about a further rotational axis (33), it being possible for the locking device (1) to be set into a locking position and into a release position, the actuating element (4) having a toothing system (4'), the locking cam (10) having a corresponding toothing system (10'), the corresponding toothing system (10') meshing with the toothing system (4'), **characterized in that** the corresponding toothing system (10') has a first opening flank (14), **in that** the toothing system (4') has a second opening flank (34), and **in that** both the first and the second opening flank (14, 34) are provided in a flattened manner in order to bring about an initially increased opening transmission ratio in comparison with the further course of the toothing systems (4', 10'), **in that** the corresponding toothing system (10') has a first closing flank (16), **in that** the toothing system (4') has a second closing flank (36), and **in that** the tooth gap (37) of the toothing system (4') which adjoins the second closing flank (36) is provided in an enlarged manner in comparison with that tooth (17) of the corresponding toothing system (10') which is arranged in the region of the first closing flank (16) and meshes with it, in order to bring about a blocking function.

2. Locking device (1) according to Claim 1, **characterized in that** an initial increase in the opening transmission ratio between the opening flanks (14, 34) is provided with an increasing opening movement.

3. Locking device (1) according to one of the preceding claims, **characterized in that** a gap is provided between the first opening flank (14) and the second opening flank (34).

4. Locking device (1) according to one of the preceding claims, **characterized in that** the locking cam (10) is provided in a spring preloaded manner, prestressed into the locking position.

5. Vehicle seat having a seat part, having a backrest part and having an adjustment fitting, a locking device (1) according to one of the preceding claims being provided as part of the adjustment fitting.

## Revendications

1. Dispositif de verrouillage (1), destiné en particulier à une ferrure de réglage et en particulier à un siège de véhicule, dans lequel le dispositif de verrouillage (1) présente une came de verrouillage (10) pouvant tourner autour d'un premier axe de rotation (13) et un élément d'actionnement (4) pouvant tourner autour d'un autre axe de rotation (33), dans lequel le dispositif de verrouillage (1) peut être réglé dans une position de verrouillage et dans une position de libération, dans lequel l'élément d'actionnement (4) présente une denture (4'), dans lequel la came de verrouillage (10) présente une denture conjuguée (10'), dans lequel la denture conjuguée (10') s'engrène avec la denture (4'), **caractérisé en ce que** la denture conjuguée (10') présente un premier flanc d'ouverture (14), **en ce que** la denture (4') présente un deuxième flanc d'ouverture (34) et **en ce que** le premier et le deuxième flanc d'ouverture (14, 34) sont prévus sous forme aplatie pour provoquer un rapport d'ouverture initialement agrandi par comparaison avec l'allure ultérieure des dentures (4', 10'), **en ce que** la denture conjuguée (10') présente un premier flanc de fermeture (16), **en ce que** la denture (4') présente un deuxième flanc de fermeture (36) et **en ce que** l'espace entre les dents (37) adjacent au deuxième flanc de fermeture (36), de la denture (4'), est prévu sous forme agrandie par comparaison avec la dent (17) de la denture conjuguée (10') s'engrenant avec elle et disposée dans la région du premier flanc de fermeture (16), pour provoquer une fonction de blocage.

2. Dispositif de verrouillage (1) selon la revendication 1, **caractérisé en ce qu'**il est prévu une augmentation initiale du rapport d'ouverture entre les flancs d'ouverture (14, 34) avec un mouvement d'ouverture croissant.

3. Dispositif de verrouillage (1) selon l'une quelconque des revendications précédentes, **caractérisé en ce qu'**il est prévu une fente entre le premier flanc d'ouverture (14) et le deuxième flanc d'ouverture (34).

4. Dispositif de verrouillage (1) selon l'une quelconque des revendications précédentes, **caractérisé en ce que** la came de verrouillage (10) est prévue avec une précontrainte appliquée par un ressort agissant en direction de la position de verrouillage.

5. Siège de véhicule avec une partie d'assise, une partie de dossier et avec une ferrure de réglage, dans lequel il est prévu un dispositif de verrouillage (1) selon l'une quelconque des revendications précédentes comme partie de la ferrure de réglage.
